# FASCICULE DE BREVET EUROPEEN

(11) **EP 1 723 476 B1**
(45) Date de publication et mention de la délivrance du brevet: **16.11.2011**
(21) Numéro de dépôt: 05715645.7
(22) Date de dépôt: 02.03.2005
(51) Int. Cl.: G04G 21/02, G04B 47/06, B63C 11/02

(54) **DISPOSITIF ÉLECTRONIQUE À AFFICHAGE ANALOGIQUE DE L'HISTORIQUE D'AU MOINS UNE GRANDEUR MESURÉE PAR UN CAPTEUR**
ELEKTRONISCHE EINRICHTUNG MIT ANALOGER ANZEIGE DER VORGESCHICHTE MINDESTENS EINER DURCH EINEN SENSOR BEMESSENEN PHYSIKALISCHEN GRÖSSE
ELECTRONIC DEVICE WITH ANALOG DISPLAY OF THE HISTORY OF AT LEAST ONE PHYSICAL QUANTITY MEASURED BY A SENSOR

(30) Priorité: 03.03.2004 EP 04100859
(43) Date de publication de la demande: 22.11.2006
(73) Titulaire: ETA SA Manufacture Horlogère Suisse, 2540 Grenchen (CH)
(72) Inventeur: RÄBER, Guy, CH-1803 Chardonne (CH); KRÄUCHI, Frank, CH-1400 Yverdon (CH); GILOMEN, Beat, CH-2540 Grenchen (CH); BERSETH, Vincent, CH-2000 Neuchâtel (CH); BORN, Jean-Jaques, CH-1110 Morges (CH); GERMIQUET, Christophe, CH-2515 Prêles (CH)
(74) Mandataire: Ravenel, Thierry Gérard Louis
(86) Numéro de dépôt international: PCT/EP2005/002165
(87) Numéro de publication internationale: WO 2005/096105

(56) Documents cités:
- EP-A- 1 008 512
- EP-A- 1 396 766
- EP-A- 1 396 767
- US-A- 4 783 772

## Description

La présente invention concerne un dispositif électronique comportant un boîtier contenant préférablement un mouvement horloger surmonté d'un cadran, le mouvement horloger comprenant des circuits électroniques susceptibles de produire des signaux horaires à destination de moyens moteurs commandant au moins deux organes d'affichage analogiques. Les organes d'affichage analogiques sont disposés au-dessus du cadran pour afficher l'heure courante dans un premier mode de fonctionnement dit mode horaire, le dispositif comprenant en outre des moyens de mémorisation, un capteur d'une grandeur physique ainsi que des moyens de traitement pour effectuer l'acquisition et la mémorisation de l'évolution de la valeur de la grandeur physique au cours du temps dans un second mode de fonctionnement du dispositif.

Plus précisément, la présente invention concerne notamment une montre présentant un affichage de type analogique et comportant un capteur permettant d'effectuer des mesures d'une grandeur physique, telle que la pression ou la température. Les mesures effectuées par le capteur peuvent ainsi être mises à profit pour informer le porteur de la montre de certaines conditions liées à son environnement comme cela peut s'avérer nécessaire lors de la pratique d'un sport, par exemple.

La présente invention concerne également un procédé d'affichage d'un historique mis en oeuvre sur un dispositif du type mentionné ci-dessus.

Se référant à la demande de brevet européen antérieure numéro 02078630.7 publié comme EP1396766, déposée le 4 septembre 2002 au nom de Asulab S.A., intitulée "Montre électronique de plongée à affichage analogique" et étant art antérieur au sens de l'article 54(3) CBE, le demandeur a procédé de sa propre initiative à une limitation de la portée des revendications de manière à exclure un mode de réalisation particulier du dispositif destiné à la pratique de la plongée et selon lequel, dans un mode de fonctionnement particulier, un premier organe d'affichage affiche une information relative à une durée restante avant de devoir effectuer un palier de décompression tandis que le second organe d'affichage affiche une information relative à une profondeur.

De manière similaire, la demande de brevet européen antérieure numéro 02078631.5 publié comme EP 1396767, déposée le 4 septembre 2002 au nom de Asulab SA, intitulée également "Montre électronique de plongée à affichage analogique" et étant art antérieur an sens de l'article 54(3) CBE, divulgue un mode de fonctionnement particulier dans lequel un premier organe d'affichage affiche une information relative à une profondeur minimale à ne pas dépasser par le porteur de la montre lors de la remontée d'une plongée, lorsque un second organe d'affichage affiche une information rélative à une profondeur.

### ARRIÈRE-PLAN TECHNOLOGIQUE

De telles montres ou dispositifs électroniques portables sont connus de l'art antérieur, à la différence que, généralement, ceux-ci sont pourvus d'un affichage de type digital. A titre d'exemple, on peut mentionner les nombreuses montres ou ordinateurs de plongée disponibles sur le marché et présentant un affichage digital de la profondeur, entre autres informations. De même, on peut mentionner les nombreuses montres disponibles sur le marché et présentant une fonction altimètre, dont l'affichage est typiquement digital.

Une proportion relativement élevée de ces produits présente une fonctionnalité de mise en mémoire des mesures effectuées à l'aide du capteur, avec la possibilité d'éditer les valeurs mémorisées ultérieurement.

Toutefois, il est généralement prévu de permettre au porteur de ces dispositifs électroniques portables d'accéder aux valeurs mémorisées par le biais d'un ordinateur personnel sur lequel ces valeurs ont préalablement été transférées. En effet, un affichage numérique sous forme digitale des valeurs mémorisées n'est pas exploitable par l'utilisateur directement sur le dispositif portable. D'autre part, la réalisation d'un affichage de type graphique n'est pas aisée du fait des dimensions nécessaires pour rendre celui-ci lisible, de telles dimensions n'étant pas compatibles avec les exigences usuelles, en termes d'encombrement, dans le domaine de la fabrication de ces dispositifs électroniques portables.

Le document US4783772 concerne une montre de plongée comportant un mode permettant la visualisation sur un écran LCD de valeurs de pression sauvegardées lors des dernières plongées. La lecture de l'évolution de ces valeurs est toutefois malcommode.

### RÉSUMÉ DE L'INVENTION

Un premier but de la présente invention est de pallier les inconvénients susmentionnés de l'art antérieur en fournissant un dispositif électronique portable permettant une visualisation des résultats de mesures précédemment effectuées à l'aide d'un capteur.

Un autre but de l'invention est de proposer un dispositif électronique portable dont l'affichage est intuitif et permet à l'utilisateur d'accéder à certaines informations autres que l'heure de manière rapide et lisible.

Dans ce but, l'invention prévoit notamment un dispositif électronique tel que défini dans la revendication 1.

La présente invention concerne également un procédé d'affichage d'un historique sur un dispositif du type décrit plus haut.

Suivant la nature des mesures effectuées, le mode historique selon la présente invention présente non seulement un intérêt ludique mais peut également présenter un intérêt du point de vue de la sécurité du porteur du dispositif.

En effet, selon un mode de réalisation particulier, on peut prévoir que le dispositif électronique comporte un capteur de pression pour afficher l'altitude de son porteur. Dans ce cas, on peut prévoir que la valeur de l'altitude est mémorisée en fonction du temps, comme par exemple durant une randonnée pédestre en montagne. Ainsi, le porteur du dispositif peut visualiser le profil de la randonnée qu'il vient d'effectuer dès la fin de cette dernière et directement sur le dispositif. Selon un mode de réalisation préféré de la présente invention, le dispositif comporte des aiguilles pour indiquer l'heure, l'une au moins de ces aiguilles étant également utilisée pour indiquer l'évolution de l'altitude en fonction du temps dans le mode historique. De cette manière, la lecture du profil de la randonnée est intuitive et aisée pour l'utilisateur. On peut bien entendu prévoir que la seconde aiguille reste immobile pendant le mode historique, ou de manière alternative, qu'elle reste superposée à la première aiguille, ou encore qu'elle se déplace régulièrement en regard du cadran pour indiquer l'écoulement du temps.

Selon un autre mode de réalisation particulier mettant également en oeuvre un capteur de pression, le dispositif peut être réalisé sous la forme d'une montre de plongée. On peut prévoir dans ce cas que, dans le mode historique, une aiguille est mise à profit pour indiquer la valeur et l'évolution de la profondeur en fonction du temps pour une plongée antérieure, tandis qu'une seconde aiguille indique éventuellement la durée écoulée depuis le début de la plongée, à un instant donné. Le dispositif selon ce mode de réalisation présente un intérêt s'étendant au-delà du simple aspect ludique. En effet, le mode historique présente un intérêt majeur en matière de sécurité, car il permet de visualiser rapidement le profil de la dernière plongée en cas d'accident.

Bien entendu, le dispositif selon la présente invention n'est pas limité à l'utilisation d'un capteur de pression. On peut avantageusement mettre en oeuvre le mode historique en relation avec des mesures effectuées par un capteur de température ou encore avec un capteur de champ magnétique, par exemple.

Par ailleurs, on peut prévoir un certain nombre de variantes de réalisation telles qu'un affichage spécifique des valeurs mesurées en cours d'acquisition, une adaptation des échelles d'affichage dans le mode historique en fonction des extremums mesurés, une activation automatique ou manuelle du mode d'acquisition, une pluralité de zones mémoires dont chacune est dédiée à une série de mesures particulières, ou encore l'agencement d'au moins un écran à cristaux liquides sur le cadran pour compléter l'affichage analogique.

### BRÈVE DESCRIPTION DES DESSINS

D'autres caractéristiques et avantages de la présente invention apparaîtront plus clairement à la lecture de la description détaillée qui suit, faite en référence aux dessins annexés donnés à titre d'exemples non limitatifs et dans lesquels:
- la figure 1 représente une vue de face d'un dispositif électronique portable selon un premier mode de réalisation de la présente invention;
- la figure 2 représente un diagramme schématique général du circuit électronique du dispositif indicateur représenté sur la figure 1;
- la figure 3a représente une vue de face similaire à celle de la figure 1 d'un dispositif électronique portable selon un second mode de réalisation de la présente invention;
- la figure 3b représente une vue de face similaire à celle de la figure 3a d'un dispositif électronique portable selon une variante du second mode de réalisation;
- la figure 4 représente une vue de face similaire à celle de la figure 1 d'un dispositif électronique portable selon un troisième mode de réalisation de la présente invention, et
- la figure 5 représente une vue de face similaire à celle de la figure 1 d'un dispositif électronique portable selon un quatrième mode de réalisation de la présente invention.

### DESCRIPTION DÉTAILLÉE

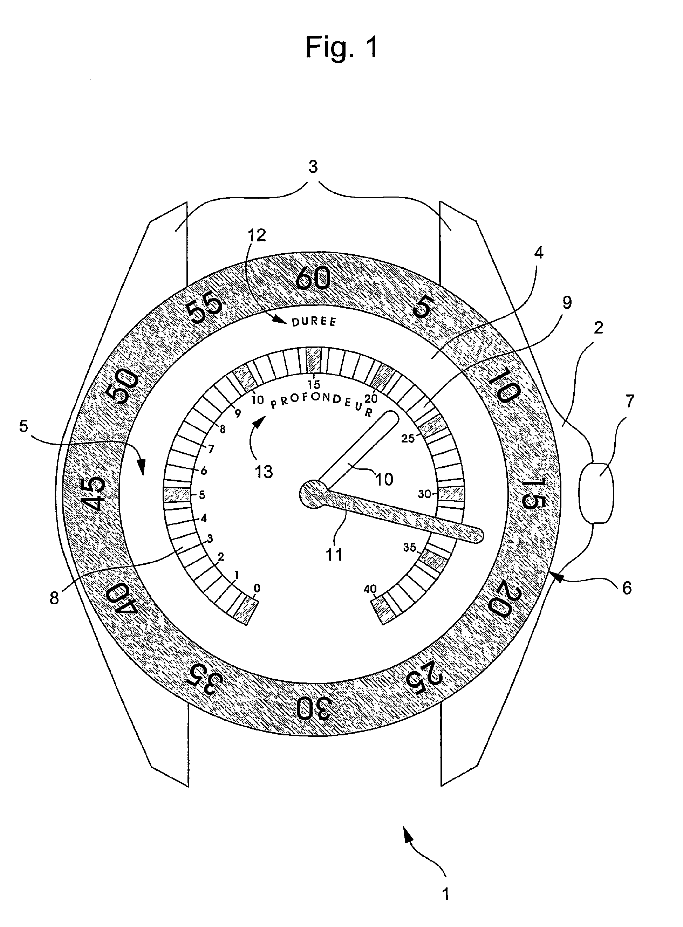

La figure 1 représente un premier mode de réalisation préféré du dispositif électronique portable selon la présente invention, sous la forme d'une montre de plongée, très simple à la fois du point de vue structurel et du point de vue de son fonctionnement. La montre 1 se présente en apparence comme une montre de type conventionnel. Celle-ci comporte, en effet, un boîtier 2 pouvant, par exemple, être du type fond-carrure moulé en matière plastique, comprenant des cornes 3 prévues pour l'attache d'un bracelet (non représenté) et contenant notamment un mouvement horloger (non représenté), un cadran 4 et fermé sur sa face supérieure par une glace 5, portant une lunette fixe 6 sur sa périphérie. La montre 1 comporte en outre un unique organe de commande 7, à savoir une tige-couronne, pouvant être utilisée en particulier en tant que poussoir en plus de son utilisation classique en rotation.

La lunette 6 porte des premières graduations de minutes s'étendant depuis une première indication de 5 minutes jusqu'à une dernière indication de 60 minutes, deux graduations successives étant espacées de 5 minutes.

Le cadran 4 porte des secondes graduations circulaires, dont l'unité est le mètre, subdivisées en deux zones. La première zone 8 s'étend, dans le sens de rotation horaire, depuis la position correspondant à la graduation des 35 minutes jusqu'à la position correspondant à la graduation des 55 minutes. La seconde zone 9 s'étend, dans le sens de rotation horaire, depuis la fin de la première zone 8 jusqu'à la position correspondant à la graduation 25 minutes. Les première et seconde zones 8 et 9 présentent des couleurs respectives différentes, les pas de graduations de la première zone 8 étant deux fois plus importants que les pas de graduations de la seconde zone 9.

La montre 1 comporte également deux aiguilles, respectivement, d'indication des heures 10 et des minutes 11. On peut également noter que l'aiguille des minutes 11 présente la même couleur que la lunette fixe 6.

Le cadran 4 porte des indications supplémentaires, données ici à titre d'exemple, en particulier le mot "durée" 12 disposé en périphérie du cadran, et l'expression " profondeur" 13, disposée directement à l'intérieur des secondes graduations. Ces indications supplémentaires 12 et 13 constituent donc quasiment les seuls indices apparents de la montre selon l'invention susceptibles de suggérer à un observateur que cette dernière présente des fonctionnalités supplémentaires par rapport à une montre conventionnelle.

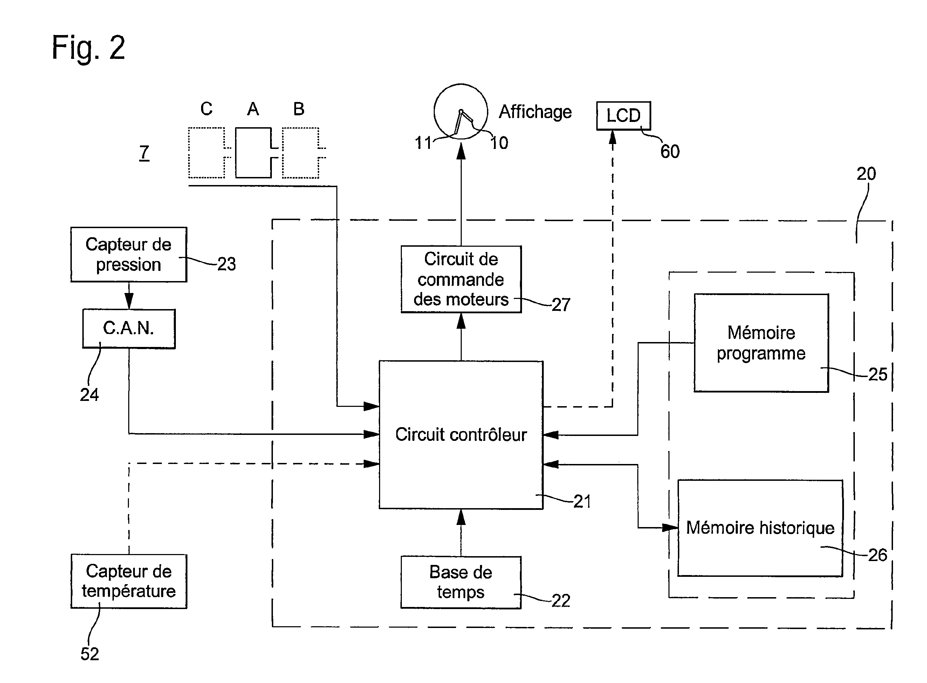

En effet, la montre 1 comporte des moyens techniques particuliers, qui seront rapidement décrits plus loin en relation avec la figure 2, lui permettant de fournir des indications spécifiques relatives à la pratique de la plongée. Ces moyens techniques comprennent notamment un capteur de pression permettant de mesurer à chaque instant la pression de l'environnement extérieur à la montre et, convertir cette dernière valeur en profondeur dans le cadre de la plongée. Ces techniques ont été décrites dans de nombreux documents de l'art antérieur et ne seront pas abordées plus en détail par la suite.

Ainsi, par une programmation adéquate du circuit électronique de la montre selon la présente invention, il est prévu un premier mode de fonctionnement, ou mode horaire, dans lequel les fonctions classiques sont assurées par les aiguilles des heures et des minutes. En outre, la tige-couronne 7 présente deux positions stables et une position instable, une première position stable étant la position au repos dans laquelle la tige-couronne ne remplit aucune fonction. De manière conventionnelle, la seconde position stable est une position tirée par rapport à la position de repos, dans laquelle la tige-couronne permet de régler, par rotation, l'indication de l'heure fournie par les deux aiguilles 10, 11. La position instable est atteinte par une pression sur la couronne en direction du boîtier 2 de la montre, un ressort (non représenté) étant prévu pour la repousser vers la position de repos lorsque la pression cesse, à la manière d'un bouton-poussoir. Chaque pression effectuée sur la tige-couronne 7 permet de commander la montre pour entraîner la modification de l'affichage en cours et pour afficher des informations dont la nature dépend de l'état de la montre 1 au moment de la pression.

Des moyens conventionnels sont prévus pour effectuer un changement de mode de fonctionnement automatique, en particulier pour passer du mode horaire à un second mode de fonctionnement, appelé mode plongée, lorsque débute une plongée. Ces moyens permettent inversement de revenir au mode horaire, de manière automatique, à partir du mode plongée lorsque le plongeur, porteur de la montre, refait surface. Dans ce but, on peut par exemple recourir à l'utilisation de deux contacts ohmiques (non représentés) dont chacun a une partie située à l'extérieur du boîtier 2 de la montre 1, cette partie externe entrant donc en contact avec l'eau lors d'une plongée. Ces deux contacts constituent ainsi un interrupteur, ouvert lorsque la montre 1 est en dehors de l'eau et fermé lorsqu'elle est immergée dans l'eau. La fermeture de cet interrupteur entraîne l'activation automatique du passage en mode plongée.

Bien entendu, comme cela a été mentionné plus haut, il est possible de prévoir des moyens manuels d'activation du mode plongée de man ière additionnelle ou alternative par rapport à l'activation automatique décrite ci-dessus. On peut notamment prévoir un organe de commande supplémentaire pour remplir cette fonction.

Ces moyens faisant partie de l'état de la technique, ils ne seront pas abordés davantage dans la présente demande de brevet, dans la mesure où ils ne constituent pas le coeur de la présente invention et où l'homme du métier ne rencontrera pas de difficulté particulière pour les mettre en oeuvre.

Une fois le mode plongée activé, les fonctions respectivement associées aux aiguilles des heures 10 et des minutes 11 sont l'affichage de la profondeur instantanée et l'affichage de la durée écoulée depuis le début de la plongée en cours.

Ainsi, lorsque le plongeur entre dans l'eau, ce qui active le mode plongée, les deux aiguilles 10 et 11 se positionnent respectivement en regard de l'indication correspondant à 35 minutes portée par la lunette 6 et, à douze heures, autrement dit en regard de l'indication 60 minutes. Lorsque le plongeur descend, l'aiguille des heures 10 se met à tourner dans le sens horaire pour indiquer la valeur de la profondeur instantanée en regard des secondes graduations 8 et 9. Dans un même temps, l'aiguille des minutes 11 se met à tourner à vitesse constante, en regard des premières graduations portées par la lunette 6, pour indiquer la durée écoulée depuis le début de la plongée.

On note que la lisibilité de l'indication de la profondeur est intuitive du fait de la proximité de l'extrémité de l'aiguille des heures 10 avec les secondes graduations du cadran. D'autre part, les couleurs de l'aiguille des minutes 11 et de la lunette 6 étant identiques, une association intuitive de l'aiguille avec les graduations correspondantes s'en trouve facilitée.

On peut noter l'excellente lisibilité de la montre de plongée 1 selon la présente invention, car l'affichage est sobre et ne fait que reprendre une structure éprouvée depuis plusieurs siècles, à savoir un système d'affichage analogique, préférablement par aiguille, bien que l'utilisation de disques tournants portant des index reste envisageable. Ainsi, il ne faut que très peu de temps au plongeur lorsqu'il consulte sa montre pour savoir dans quelle situation il se trouve par rapport à la plongée en cours. En effet, la lecture de la durée écoulée en minutes est intuitive puisqu'elle est similaire à la lecture des minutes en mode horaire.

Des fonctionnalités supplémentaires sont également prévues sur la montre de plongée 1 et sont accessibles par le biais de la tige-couronne 7. La nature des fonctions accessibles, mis à part le mode historique, et la façon d'y accéder sont fournies à titre d'exemples non limitatifs.

Des moyens peuvent être prévus pour commander les aiguilles des heures 10 et des minutes 11 en réponse à une pression sur la tige-couronne 7 à partir du mode plongée, de telle manière qu'elles affichent respectivement la profondeur maximale atteinte pendant la plongée en cours et la durée écoulée de la plongée. On peut alors prévoir un retour automatique au mode plongée après un intervalle de temps de quelques secondes. On peut également prévoir que le retour en mode plongée est obtenu par une nouvelle pression sur la tige-couronne 7.

D'autre part, des moyens additionnels sont prévus pour commander les aiguilles des heures 10 et des minutes 11 en réponse à une pression sur la tige-couronne 7 à partir du mode horaire, de telle manière qu'elles affichent respectivement la profondeur maximale atteinte lors de la dernière plongée effectuée et la durée totale de cette dernière. On peut alors prévoir un retour au mode horaire automatique ou obtenu par une nouvelle pression sur la tige-couronne 7. De même, on peut prévoir que le circuit électronique de la montre 1 comporte des zones mémoire en nombre suffisant pour mémoriser les paramètres, à savoir durée totale et profondeur maximale, des cinq dernières plongées, par exemple. Dans ce cas, on peut par exemple prévoir qu'une pression longue sur la tige-couronne 7, à partir du mode horaire, entraîne le passage en mode d'affichage des paramètres des dernières plongées, le choix de la plongée étant effectué par des pressions courtes successives sur la tige-couronne 7 et, le retour au mode horaire étant préférablement automatique ou obtenu par une nouvelle pression longue sur la tige-couronne 7. Dans ce dernier cas de figure, on peut également prévoir des moyens pour commander les aiguilles 10 et 11 pour qu'elles se superposent en regard des secondes graduations 8 pendant une durée prédéfinie, de l'ordre de quelques secondes, de manière à indiquer le numéro de la plongée dont les paramètres sont affichés automatiquement après la durée prédéfinie.

Conformément à la présente invention, la montre de plongée 1 comporte un troisième mode de fonctionnement, appelé mode historique, activé par une nouvelle action sur la tige-couronne 7. On peut indifféremment programmer la montre pour que cette dernière activation se fasse en réponse à une nouvelle pression longue à partir du mode d'affichage des paramètres des dernières plongées, ou encore en réponse à une double pression à partir du mode horaire, par exemple. Typiquement, la montre retourne automatiquement en mode horaire après la fin de l'affichage de l'historique. Toutefois, une action manuelle sur la tige-couronne 7 peut bien entendu être prévue, de manière complémentaire, pour forcer le retour au mode horaire avant la fin de l'historique.

Pour la mise en oeuvre du mode historique, des moyens sont prévus pour commander les aiguilles des heures 10 et des minutes 11, de telle manière qu'elles reproduisent le comportement qu'elles ont respectivement présenté lors de la plongée précédemment sélectionnée.

On peut prévoir plusieurs variantes de mise en oeuvre du mode historique. Dans la mesure où une plongée peut durer plusieurs dizaines de minutes, il est préférable de commander les aiguilles 10 et 11 de telle manière qu'elles reproduisent leurs comportements respectifs avec une vitesse accélérée par rapport à la vitesse d'acquisition des mesures. L'homme du métier pourra définir des paramètres d'accélération convenant à ses propres besoins et programmer le circuit électronique de la montre en conséquence, sans sortir du cadre de la présente invention. On peut prévoir, par exemple, une division par 60 de la du rée totale de la plongée à visualiser, de sorte que dix minutes de plongée sont reproduites en dix secondes dans le mode historique.

Une variante préférée de mise en oeuvre de l'historique du point de vue de la vitesse de reproduction consiste à reproduire toute plongée effectuée, quelle qu'en soit la durée, dans une fenêtre de temps prédéfinie par le fabricant de la montre. La fenêtre de temps peut être définie avec une longueur fixe ou avec une longueur variable, comprise entre deux valeurs extrêmes. A titre d'exemple, on peut prévoir que la durée de l'historique est fixée à 30 secondes, le mouvement des aiguilles 10 et 11 étant alors adapté pour ramener la durée effective de la plongée à 30 secondes. On peut également prévoir, de manière alternative, que la durée de l'historique est comprise entre 15 et 30 secondes notamment en fonction de la durée effective de la plongée à reproduire.

Dans le cas d'un dispositif réalisé sous la forme d'une montre de plongée, il convient de prévoir en outre un type d'activité sportive qui se distingue notablement de la plongée avec bouteille, à savoir la plongée en apnée. La durée moyenne d'une plongée en apnée est de l'ordre de quelques minutes donc nettement inférieure à la durée moyenne d'une plongée avec bouteille. De ce fait, la méthode retenue pour accélérer l'affichage de l'historique par rapport à la plongée effective, tel que décrit plus haut, n'est pas forcément adaptée à l'application du mode historique à une série de mesures de pression correspondant à une plongée en apnée.

Par conséquent, il peut s'avérer utile, selon une variante préférée de la montre de plongée conforme à la présente invention, de prévoir un traitement spécifique des séries de mesures effectuées lors de plongées en apnée.

On peut définir un critère sur la durée d'un e plongée pour permettre aux circuits électroniques de la montre de distinguer une plongée avec bouteille d'une plongée en apnée, comme par exemple définir toute plongée dont la durée est inférieure à 3 minutes comme étant une plongée en apnée. Dans ce cas, on peut envisager d'afficher l'historique d'une telle plongée en divisant sa durée effective par six. Ainsi, la plongée en apnée la plus longue d'après le critère retenu ci-dessus à titre d'exemple, c'est-à-dire 3 minutes, est reproduite en 30 secondes dans le mode historique. Bien entendu, on peut alternativement recourir au procédé précédemment décrit consistant à utiliser une fenêtre de durée comprise entre 15 et 30 secondes, le facteur liant les durées de la plongée respectivement effective et dans le mode historique prenant une certaine valeur dépendant de la durée effective de la plongée.

Lorsque le capteur de pression est alimenté pour effectuer une mesure par seconde, on prévoit préférablement de mémoriser chaque mesure dans une zone mémoire spécifique au moins pendant les trois premières minutes. Si la plongée est une plongée en apnée dont la durée est inférieure à trois minutes, un nombre suffisant de mesures est ainsi mémorisé pour permettre une reproduction fiable de l'historique de la plongée.

Lorsque la plongée dure plus de trois minutes, on prévoit avantageusement une mise en mémoire des mesures à une fréquence plus faible que la fréquence de mesure du capteur de pression. Une telle disposition permet de limiter la taille de la zone mémoire nécessaire lorsque la durée de la plongée devient plus importante, sans nuire toutefois à la qualité de reproduction de l'historique. De manière préférée, on prévoit l'enregistrement d'une valeur de la pression, ou de la profondeur, avec une période de l'ordre de quelques dizaines de secondes en plongée avec bouteille, par exemple, toutes les 30 secondes. En outre, il est prévu que lorsque la durée de la plongée en cours atteint 3 minutes, suivant l'exemple fourni plus haut, une grande partie des mesures mémorisées est effacée de manière à libérer des emplacements mémoire pour les mesures ultérieures. En effet, il suffit alors de ne conserver que des mesures effectuées à des intervalles de temps d'une durée correspondant à la période prévue pour l'enregistrement des mesures de plongées avec bouteille, c'est-à-dire 30 secondes suivant l'exemple mentionné précédemment.

Si on considère l'exemple numérique précédent, donné à titre illustratif et non limitatif, la mémorisation des trois premières minutes d'une plongée nécessite 180 emplacements mémoire, ce nombre étant ensuite réduit à 6 lorsque la durée de la plongée franchit 3 minutes. D'autre part, lorsque la plongée se prolonge, du fait de la plus faible fréquence des mémorisations, il devient possible de mémoriser le profil de la plongée pendant une durée maximale d'une heure et demie avec un tel nombre d'emplacements mémoire, ce qui suffit à répondre aux besoins d'une large majorité de plongeurs.

Selon une alternative préférée de la gestion de la mémoire du dispositif électronique, on peut prévoir une variation plus progressive de la fréquence de mise en mémoire des résultats des mesures. A titre illustratif, on peut prévoir que pour une durée de la plongée comprise entre 0 et 2 minutes, un résultat de mesure sur deux est mis en mémoire, autrement dit le dispositif mémorise une valeur toutes les deux secondes lorsque la fréquence des mesures est de 1 Hz. Dans ce cas, il faut prévoir au moins 60 emplacements mémoire pour stocker ces valeurs. Lorsque la durée de la plongée atteint 2 minutes, le circuit contrôleur du dispositif est alors préférablement programmé de manière qu'une valeur sur deux précédemment mise en mémoire est effacée, les valeurs restant en mémoire étant alors décalées pour être stockées dans des emplacements successifs. Dans un même temps, la fréquence de la mise en mémoire est adaptée à cette nouvelle situation en étant divisée par deux, c'est-à-dire qu'une mesure est mémorisée toutes les 4 secondes. Lorsque la durée de la plongée atteint 4 minutes, tous les emplacements mémoires sont à nouveau occupés. Le circuit contrôleur est alors agencé pour répéter l'opération précédemment décrite, à savoir libérer un emplacement mémoire sur deux, décaler les valeurs restantes et modifier une nouvelle fois la fréquence de mise en mémoire des nouvelles mesures. Lorsque la durée de la plongée présente une valeur importante, il est possible de prévoir que ce processus se répète autant de fois que nécessaire. On peut alternativement prévoir qu'au-delà d'une certaine durée, comme par exemple 15 minutes, la fréquence de mise en mémoire des mesures est divisée par un facteur plus élevé que deux, de telle sorte que le nombre d'emplacements mémoires soit suffisant pour mettre en mémoire les valeurs mesurées pour une plongée dont la durée atteindrait une valeur prédéfinie, qui pourrait être de l'ordre de 1 heure et trente minutes, par exemple.

Bien entendu, on peut prévoir des durées d'intervalles différentes pour effectuer les modifications de la fréquence de mise en mémoire, de même que des valeurs différentes pour le facteur de division de la fréquence sans sortir du cadre de la présente invention.

Grâce à une telle méthode de gestion de la mémoire, une résolution temporelle optimale de l'affichage des valeurs mesurées en cours de plongée est garantie lors du fonctionnement du mode historique.

Le mode historique présente un intérêt majeur en matière de sécurité, car il permet de visualiser rapidement le profil de la plongée sélectionnée, ce qui constitue une information très importante pour un médecin appelé suite à un accident de plongée. Habituellement, un médecin peut effectuer la visualisation du profil de plongée par transfert de données à partir d'un ordinateur de plongée sur un terminal de lecture et d'exploitation, éventuellement du type ordinateur personnel. Le mode historique selon la présente invention procure un avantage sur les dispositifs appartenant à l'état de la technique en termes de rapidité d'accès à ces informations. En outre, les avantages exposés plus haut, concernant la lisibilité de la montre de plongée 1 s'appliquent également à l'utilisation du mode historique. La visualisation du profil de la plongée sélectionnée est en effet assez aisée à partir de l'observation du déplacement des aiguilles 10 et 11.

La figure 2 est un diagramme schématique de la structure générale du circuit électronique de la montre de plongée selon la présente invention.

De manière générale, le circuit électronique de la montre comprend notamment un circuit intégré 20 comportant un circuit contrôleur 21 susceptible de gérer les fonctions horaires conventionnelles de la montre 1 comprenant, dans ce but, un circuit de division du temps et relié notamment à un résonateur 22 fournissant une base de temps. A partir de cette base de temps, des informations temporelles sont produites par le circuit contrôleur 21, notamment pour assurer les fonctions du mode horaire et les fonctionnalités relatives au mode plongée.

En outre, le circuit contrôleur 21 reçoit en entrée des signaux générés par un capteur de pression 23 générant des signaux électriques analogiques représentatifs de la pression environnante. Ces signaux transitent par un convertisseur analogique-numérique 24 avant d'être fournis en entrée du circuit contrôleur 21, sous la forme d'un signal digital.

Le capteur de pression 23 est de type conventionnel et l'homme du métier ne rencontrera pas de difficulté particulière pour en choisir un qui soit adapté à la mise en oeuvre de la présente invention.

Le circuit intégré 20 comporte également des zones de mémoire, notamment une première zone de mémoire 25, préférablement de type non volatile, contenant un programme permettant au circuit contrôleur 21 d'effectuer des calculs relatifs au mode plongée, comme par exemple la conversion des mesures de pression en valeurs de profondeur. Le choix d'une mémoire non volatile reprogrammable (Flash ou EPROM, par exemple) permet éventuellement de mettre à jour ultérieurement le programme de calcul. Le circuit intégré 20 comporte de manière préférée au moins une seconde zone de mémoire 26, également de type non volatile, dans laquelle les mesures ainsi que les résultats des calculs effectués par le circuit contrôleur 21 sont stockés périodiquement. Cette seconde zone de mémoire 26 est notamment prévue pour stocker les mesures de profondeur et les mesures temporelles correspondantes relatives à la ou aux dernières plongées, le cas échéant. Ainsi, ces informations sont consultées par le circuit contrôleur 21, en particulier lorsque la montre est dans le mode historique.

A partir de ces signaux d'entrée respectifs, le circuit contrôleur 21 détermine la situation du plongeur à chaque instant d'une plongée. Le circuit contrôleur 21 envoie alors des signaux adaptés à un circuit de commande 27 de moyens moteurs bi-directionnels, de telle manière que l'aiguille des heures 10 affiche la profondeur instantanée en regard des secondes graduations 8 et 9 du cadran. De même, le circuit contrôleur 21 produit des signaux adaptés pour le circuit de commande 27 des moyens moteurs, par exemple deux moteurs bi-directionnels, de telle manière que l'aiguille des minutes 11 affiche la durée écoulée depuis le début de la plongée, en regard des graduations portées par la lunette 6 de la montre.

Un avantage supplémentaire de la montre de plongée selon l'invention apparaît du fait de son esthétique. En effet, du fait de la discrétion de sa présentation, ce qui n'est généralement pas le cas des ordinateurs de plongée conventionnels, la présente montre peut être portée en toute circonstance et donc en permanence. Ainsi, son utilisateur n'est pas obligé d'anticiper une plongée à venir pour porter la montre dans la mesure où il peut la porter en permanence sans faire aucune concession d'ordre esthétique.

Par ailleurs, le circuit électronique de la montre comporte des moyens conventionnels (non représentés) pour détecter des pressions effectuées par l'utilisateur sur la tige-couronne 7. Cette dernière se trouve en position A au repos et présente deux positions extrêmes B et C. La position B, instable, obtenue par une pression de l'utilisateur active une fonction du circuit contrôleur 21 modifiant le mode de fonctionnement de la montre, tel que décrit plus haut. Lorsque la tige-couronne 7 est enfoncée en position B à partir du mode horaire, le circuit contrôleur 21 génère des signaux, à destination du circuit de commande 27 des moteurs, de telle manière que les aiguilles des heures 10 et des minutes 11 affichent respectivement la profondeur maximale et la durée totale de la dernière plongée. En outre, conformément à ce qui a été décrit précédemment, on peut prévoir une activation du mode historique par une pression longue en position B de la tige-couronne 7, à partir du mode d'affichage des paramètres de la dernière plongée, ou par une pression double à partir du mode horaire. D'autre part, lorsque la tige-couronne 7 est enfoncée en position B à partir du mode plongée, le circuit contrôleur 21 génère des signaux, à destination du circuit de commande 27 des moteurs, de telle manière que les aiguilles des heures 10 et des minutes 11 affichent respectivement la profondeur maximale atteinte et la durée écoulée depuis le début de la plongée en cours.

Bien entendu, l'homme du métier est capable de programmer comme il le souhaite le circuit intégré 20 de la montre selon la présente invention, pour prévoir des réponses respectivement adaptées aux différentes actions possibles sur la tige-couronne 7.

En outre, des moyens conventionnels bien connus de l'homme du métier sont mis en oeuvre pour permettre une correction de l'heure courante indiquée par les aiguilles 10 et 11, en mode horaire, lorsque la tige-couronne 7 est tirée dans la position stable C.

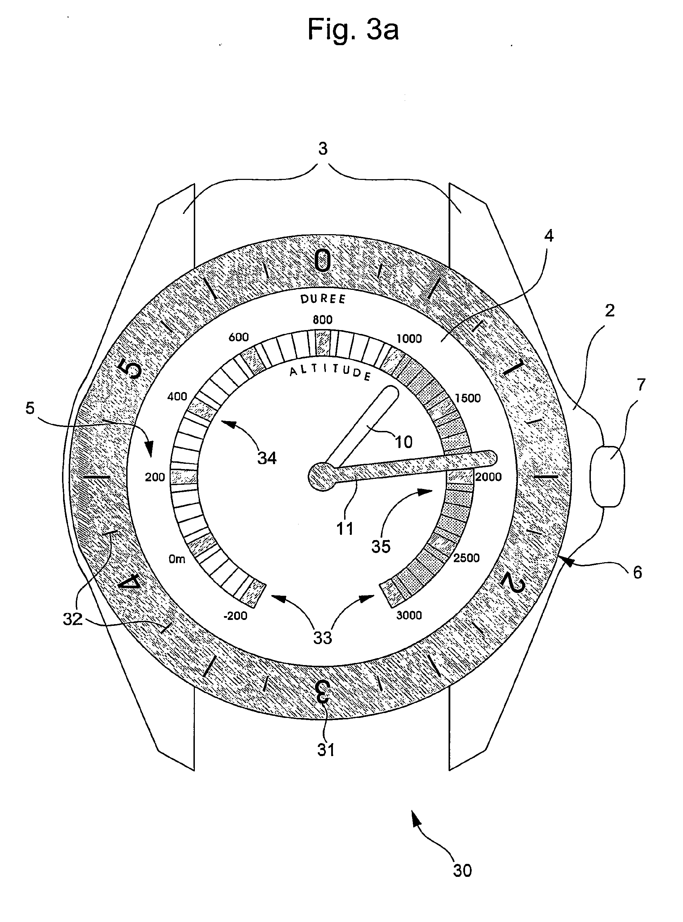

La figure 3a représente un dispositif électronique portable selon un second mode de réalisation de la présente invention, dans une vue similaire à la vue de la figure 1. Le principe régissant le fonctionnement du dispositif selon ce mode de réalisation est semblable au principe décrit en relation avec les figures 1 et 2. Ainsi, la plupart des éléments décrits en rapport avec la figure 1 sont repris sur la figure 3a et portent les mêmes références numériques dans un souci de simplification.

Le dispositif électronique de la figure 3a est une montre 30 présentant une fonction d'altimètre. Par conséquent, la montre 30 comporte des moyens d'indication de l'heure, dans un mode de fonctionnement horaire, similaires à ceux décrits en relation avec le premier mode de réalisation, dont notamment des aiguilles des heures 10 et des minutes 11.

La lunette fixe 6 porte des premières graduations 31 dont l'unité est l'heure et espacées de telle manière qu'un tour complet de la lunette correspond à une durée de six heures. Des index 32 supplémentaires sont prévus pour repérer chaque quart d'heure.

Le cadran 4 porte des secondes graduations 33, dont l'unité est le mètre, réparties suivant deux zones contiguës. La première zone 34 s'étend sur un demi-tour de cadran et porte des graduations comprises entre -200 mètres et 1000 mètres. La seconde zone 35 est située dans le prolongement de la première zone, s'étend sur un tiers de tour de cadran et, porte des graduations comprises entre 1000 et 3000 mètres dont le pas est plus petit que celui des graduations de la première zone.

De même que dans le premier mode de réalisation, on peut noter que l'aiguille des minutes 11 est préférablement de la même couleur que la lunette fixe 6 dans le but d'améliorer la lisibilité de la montre 30.

La montre 30 est en outre munie d'un capteur de pression (non représenté) capable, dans un second mode de fonctionnement d'altimètre, de mesurer la valeur de la pression environnante et de produire un signal électrique à destination de circuits électroniques, éventuellement réalisés sous la forme d'un circuit intégré similaire au circuit intégré 20 de la figure 2.

De manière préférée, le mode altimètre est activé manuellement par l'utilisateur de la montre 30, par une action sur la tige-couronne 7, détectée par le circuit intégré 20. On peut éventuellement prévoir deux fonctions différentes relatives à l'indication d'une altitude.

Une première fonction "d'altimètre simple" consiste à indiquer l'altitude à un instant donné en réponse, par exemple, à une pression courte sur la tige-couronne 7. Dans ce cas, le capteur de pression effectue une mesure ou une série finie de mesures dont les résultats sont transmis au circuit intégré 20 pour être convertis en altitude. Le circuit intégré 20 produit alors des signaux électriques à destination du circuit de commande 27 des moteurs, de telle manière que l'aiguille des heures 10 indique l'altitude calculée en regard des secondes graduations 33 du cadran. Pour faciliter la lecture, on prévoit préférablement de commander l'aiguille des minutes 11 de telle manière qu'elle reste superposée à l'aiguille des heures 10 lorsque la montre 30 se trouve dans la fonction d'altimètre simple. De façon avantageuse, la montre retourne automatiquement en mode horaire après quelques secondes, l'alimentation du capteur de pression étant interrompue pour en limiter la consommation électrique.

Une seconde fonction "d'altimètre de randonnée" consiste à indiquer notamment l'altitude sur une période prolongée correspondant à une période de pratique de la randonnée, pédestre ou cycliste. On peut par exemple prévoir que l'utilisateur active cette seconde fonction par une pression de quelques secondes sur la tige-couronne 7. Lorsque le circuit intégré 20 détecte le signal d'activation de la fonction d'altimètre de randonnée, il commande l'alimentation du capteur de pression et produit un signal de commande pour provoquer le déplacement des aiguilles des heures 10 et des minutes 11. Les aiguilles des heures et des minutes sont déplacées, à partir de l'affichage de l'heure, pour se positionner respectivement en regard de l'altitude calculée à partir de la mesure de pression environnante et en regard de la première graduation "0" portée par la lunette fixe 6.

Le capteur de pression est alors alimenté pour effectuer des mesures de la pression environnante de manière périodique, ces mesures de pression étant converties en altitude pour être affichées par l'aiguille des heures 10 en regard des secondes graduations 33. Le capteur est alimenté de manière périodique, préférablement toutes les cinq ou dix secondes.

Dans un même temps, l'aiguille des minutes 11 est commandée pour tourner dans le sens horaire, avec une vitesse telle qu'elle effectue un tour complet du cadran en six heures, pour indiquer la durée écoulée depuis le début de la randonnée. Si une randonnée dure plus de six heures, l'aiguille des minutes continue son mouvement de rotation et commence un nouveau tour de cadran tant que la fonction d'altimètre de randonnée reste active.

Conformément à la présente invention, lorsque la fonction altimètre de randonnée est activée, les résultats de mesure du capteur de pression sont mis en mémoire à l'aide de moyens de mémorisation similaires à ceux décrits en relation avec le premier mode de réalisation.

L'homme du métier ne rencontrera pas de difficulté particulière pour choisir une période séparant deux mesure du capteur de pression présentant un bon compromis pour ses propres besoins, entre la consommation électrique du capteur et la taille de la mémoire nécessaire pour stocker les résultats des mesures lorsque la randonnée présente une durée importante. On peut prévoir, à titre illustratif, que seulement une valeur sur deux ou sur trois mesurées par le capteur de pression est mise en mémoire dans le but d'être éditée ultérieurement dans un mode historique.

Le mode historique mis en oeuvre dans le dispositif selon le présent mode de réalisation est similaire à celui décrit en relation avec le premier mode de réalisation. Il est préférablement activé par une action prédéfinie sur la tige-couronne 7 à partir du mode horaire. Suite à la détection de l'action adéquate sur la tige-couronne, le circuit intégré 20 commande les aiguilles des heures 10 et des minutes 11 pour qu'elles reproduisent l'affichage du profil de la dernière randonnée, c'est-à-dire de l'altitude en fonction du temps, correspondant aux mesures mémorisées dans les moyens de mémorisation de la montre.

De même que dans le premier mode de réalisation, on peut prévoir une pluralité de zones mémoire, chacune susceptible de stocker les valeurs correspondant à une randonnée particulière. Des séquences d'actions adaptées sur la tige-couronne 7 sont alors prévues pour permettre à l'utilisateur de sélectionner les données relatives à une randonnée plutôt qu'à une autre.

En outre, on peut également prévoir différents paramètres pour la vitesse d'affichage de l'historique de la dernière randonnée sans sortir du cadre de la présente invention. A titre illustratif, on peut prévoir deux durées différentes d'affichage de l'historique selon la durée de la randonnée en mémoire, telles qu'une durée de 30 secondes pour afficher l'historique d'une randonnée ayant duré jusqu'à trois heures et une durée de 1 minute pour afficher l'historique d'une randonnée ayant duré plus de trois heures.

Ainsi, dans le mode historique, l'aiguille des minutes 11 est commandée pour indiquer, à un instant donné, la valeur de la durée écoulée depuis le début de la randonnée, tandis que l'aiguille des heures 10 indique la valeur correspondante de l'altitude, calculée à partir de la mesure du capteur de pression.

Les moyens d'activation et de désactivation du mode historique, de même que les moyens permettant sa mise en oeuvre ne seront pas décrits plus en détail dans la mesure où ils peuvent être similaires aux moyens décrits en relation avec le premier mode de réalisation.

On peut noter que le concept du mode historique tel que décrit en relation avec les premier et second modes de réalisation de la présente invention est le même. En effet, dans ces deux modes de réalisation, le mode historique consiste à afficher au moins la valeur d'une grandeur liée à la valeur d'une grandeur mesurée par un capteur, en fonction du temps. L'affichage de cette valeur est réalisé par un premier organe d'affichage analogique normalement utilisé pour afficher l'heure courante. On peut alors prévoir plusieurs variantes de réalisation, sans sortir du cadre de la présente invention, en ce qui concerne le comportement du second organe d'affichage analogique dans le mode historique. En effet, comme cela a été mentionné plus haut, on peut prévoir que le second organe d'affichage reste immobile dans une position prédéfinie, qu'il se superpose au premier organe d'affichage, ou encore qu'il indique, à un instant donné de la reproduction de l'historique, la durée écoulée depuis le début des mesures jusqu'à cet instant.

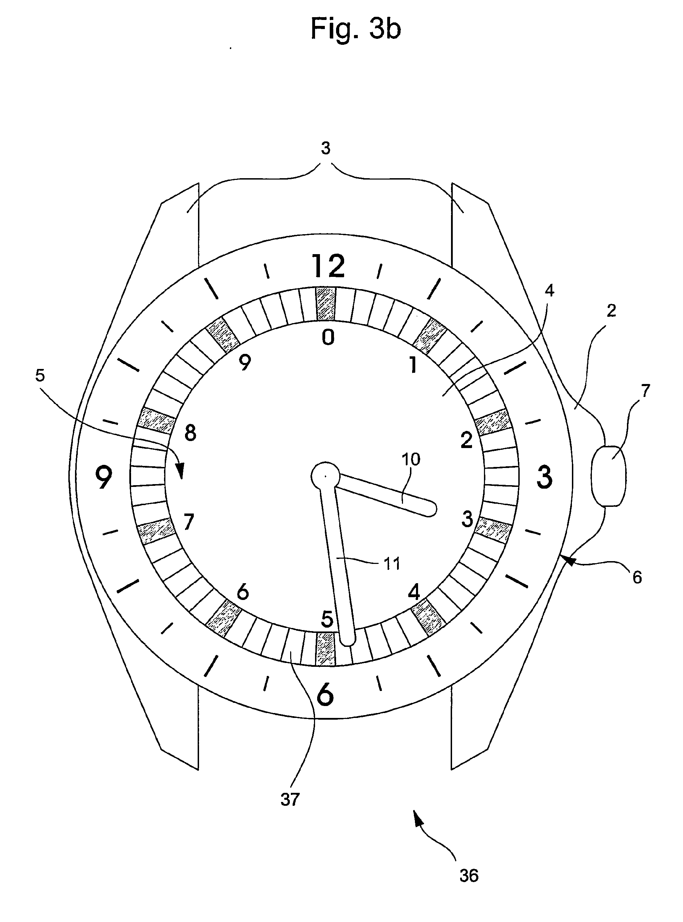

La figure 3b représente une variante du dispositif qui vient d'être décrit en relation avec la figure 3a, le dispositif 36 selon cette variante étant similaire à celui de la figure 3a.

Le dispositif selon la présente variante de réalisation comporte des premières graduations conventionnelles d'indication des heures sur la lunette fixe 6 ainsi que des secondes graduations 37 en mètres disposées sur le cadran et s'étendant sur un tour complet. Les secondes graduations comprennent des indications numériques de 0 à 9, régulièrement espacées sur la périphérie des graduations.

La différence essentielle distinguant le dispositif selon la présente variante de celui représenté sur la figure 3 se situe au niveau de la méthode retenue pour afficher les valeurs d'altitude et au niveau des moyens employés pour sa mise en oeuvre. Il est en effet prévu, dans la présente variante, de commander simultanément les deux aiguilles des heures 10 et des minutes 11 pour indiquer la valeur d'une altitude. Dans ce but, l'aiguille des heures 10 est commandée pour indiquer, en relation avec les secondes graduations 37, le nombre de milliers de mètres correspondant à l'altitude du porteur du dispositif à un instant donné. L'aiguille des minutes 11 est commandée pour compléter cette information, en indiquant en relation avec les secondes graduations 37 lues avec un facteur 1/10 par rapport à la lecture faite en relation avec l'aiguille des heures 10, les centaines et dizaines de mètres correspondant à l'altitude du porteur.

Ainsi, à titre illustratif, dans la configuration représentée sur la figure 3b, le dispositif indique au porteur qu'il se situe à une altitude de 3480 mètres, les trois milliers de mètres étant indiqués par l'aiguille des heures 10 et les 480 mètres restant étant indiqués par l'aiguille des minutes 11.

De même que pour la variante décrite en relation avec la figure 3a il peut être prévu deux modes de fonctionnement altimètre, un "simple" et un "de randonnée", les mesures réalisées lors du fonctionnement du dispositif en mode "altimètre de randonnée" étant mises en mémoire.

Un mode historique est prévu, de manière similaire à ce qui a été décrit plus haut, dans lequel les aiguilles des heures 10 et des minutes 11 sont commandées par les circuits électroniques de la montre pour reproduire à vitesse accélérée le comportement qu'elles ont présenté lors du fonctionnement du mode "altimètre de randonnée".

A la différence de la variante décrite en relation avec la figure 3a, il n'est pas prévu ici d'afficher la durée écoulée depuis le début d'une randonnée dans la mesure où les deux aiguilles 10 et 11 sont utilisées simultanément pour afficher la valeur d'une altitude. En contrepartie, on peut bien entendu prévoir qu'en réponse à une séquence d'actions prédéfinie sur la tige-couronne 7 les aiguilles des heures 10 et des minutes 11 affichent la valeur de la durée totale écoulée pendant le fonctionnement du mode "altimètre de randonnée".

Un avantage de la présente variante par rapport à celle décrite en relation avec la figure 3a est une meilleure lisibilité, en particulier pour les valeurs d'altitude supérieures à 1000 mètres.

Le dispositif selon la variante de la figure 3b ne sera pas décrit plus en détail dans la mesure où l'homme du métier ne rencontrera pas de difficulté particulière pour sa mise en oeuvre.

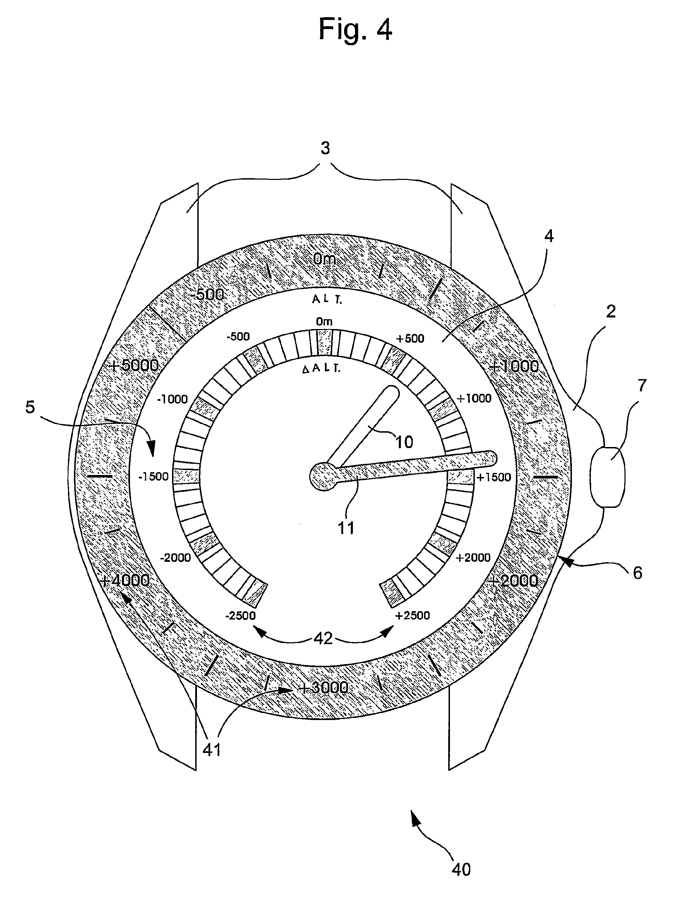

La figure 4 représente un dispositif électronique portable selon un troisième mode de réalisation de la présente invention, dans une vue similaire à la vue de la figure 1. Le présent mode de réalisation repose sur un principe légèrement différent de celui décrit ci-dessus. En effet, il est prévu ici de munir le dispositif électronique d'au moins un capteur d'une grandeur physique et de déduire les valeurs respectives de deux variables différentes à partir des mesures du capteur. De manière préféré, le dispositif électronique portable est une montre comportant un premier mode de fonctionnement horaire avec un affichage de type analogique, un second mode de fonctionnement d'acquisition des mesures par le capteur et, un troisième mode de fonctionnement dit mode historique.

La montre 40, représentée sur la figure 4 est de forme similaire à celle des montres des figures 1 et 3, de même que les circuits électroniques assurant son fonctionnement. Les éléments similaires aux éléments déjà décrits en relation avec les figures 1 et 3 portent les mêmes références numériques et ne seront plus décrits en rapport avec la figure 4.

La montre 40 illustrée est également du type avec capteur de pression et comporte une fonction altimètre, de même que la montre décrite en relation avec la figure 3. Des premières graduations 41 en mètres sont arrangées sur la lunette fixe 6 de la montre 40 et sont utilisées en relation avec l'aiguille des minutes 11 pour indiquer une altitude, dans un mode de fonctionnement altimètre de la montre 40. Dans ce but, les graduations 41 s'étendent sur un tour complet de la lunette fixe 6, depuis une position située sensiblement à mi-chemin entre les positions horaires correspondant respectivement à 10 heures et 11 heures. La plage correspondante de valeurs des graduations 41 s'étend sensiblement entre -750 et +5250 mètres, de sorte que la graduation correspondant à l'altitude au niveau de la mer soit disposée à 12 heures. De manière préférée non limitative, on prévoit d'utiliser une couleur similaire pour la lunette fixe 6 et l'aiguille des minutes 11 pour améliorer la lisibilité de l'affichage de l'altitude.

Des secondes graduations 42, également en mètres, sont représentées sur le cadran 4 et sont utilisées en relation avec l'aiguille des heures 10 pour indiquer la valeur d'une variation d'altitude ou dénivelé. La graduation correspondant à un dénivelé nul est disposée à 12 heures, tandis que les graduations 42 s'étendent de manière symétrique, d'une part entre la position 12 heures et la position 5 heures pour indiquer la valeur d'un dénivelé positif et, d'autre part, entre la position 12 heures et la position 7 heures pour indiquer la valeur d'un dénivelé négatif. En particulier, il est prévu à titre illustratif que les valeurs des secondes graduations 42 sont comprises sensiblement entre -2500 et +2500 mètres.

La montre 40 comporte, outre un premier mode de fonctionnement horaire, un second mode de fonctionnement altimètre ainsi qu'un troisième mode dit historique.

De même que les montres 30 et 36, respectivement décrites en relation avec les figures 3a et 3b, on peut prévoir que la montre 40 comporte deux fonctions altimètre, une "simple" et une "randonnée".

Préférablement, mais de manière non limitative, les deux aiguilles 10 et 11 se superposent lorsque la fonction "altimètre simple" est activée pour indiquer la valeur de l'altitude, à un instant donné, calculée sur la base d'au moins une mesure effectuée par le capteur de pression. Après quelques secondes d'affichage de l'altitude instantanée, la montre 40 retourne automatiquement en mode horaire, les aiguilles des heures et des minutes reprenant leur fonction première d'indication de l'heure courante.

De même que mentionné en relation avec le mode de réalisation précédent, à titre d'exemple, une double pression courte ou une pression longue sur la tige-couronne 7 active la fonction "altimètre de randonnée". Dans ce second mode de fonctionnement, le capteur de pression est alimenté périodiquement pour prendre des mesures de la pression atmosphérique environnante et les mémoriser dans une zone mémoire adaptée, dans le but d'afficher ultérieurement le profil de la randonnée correspondante lors de l'exécution du mode historique.

Conformément au présent mode de réalisation, le circuit intégré 20 de la montre 40 exécute une étape préliminaire de mise en mémoire d'une valeur initiale de la pression sur la base de l'une des premières mesures effectuées par le capteur de pression. La valeur de pression initiale correspond ainsi à l'altitude à laquelle se trouve le porteur au début du mode d'acquisition, c'est-à-dire typiquement lorsque le porteur débute une randonnée.

Le circuit intégré 20 traite le résultats des mesures effectuées ultérieurement par le capteur de pression, pour associer à chaque valeur de pression mesurée une valeur d'altitude ainsi qu'une valeur de dénivelé, cette dernière étant calculée de manière conventionnelle à partir de la valeur de pression initiale mise en mémoire. Préférablement, les valeurs calculées sont affichées sur la montre 40 pendant le mode d'acquisition, l'altitude étant indiquée par l'aiguille des minutes 11 et le dénivelé par l'aiguille des heures 10. On peut prévoir, de manière non limitative, qu'une pression courte sur la tige-couronne 7 pendant le déroulement du mode d'acquisition fait passer la montre à un affichage de l'heure pendant quelques secondes avant qu'elle ne retourne à un affichage des valeurs calculées.

On pourrait également prévoir que la montre 40 continue d'afficher l'heure courante pendant tout le déroulement du mode d'acquisition sans sortir du cadre de la présente invention, les valeurs calculées étant alors affichées dans le mode historique tel qu'exposé ci-dessous. Dans ce cas, il pourrait également être prévu que la montre 40 affiche l'altitude et le dénivelé parcouru depuis le début d'une randonnée pendant quelques secondes en réponse à une action sur la tige-couronne 7.

Par ailleurs, les valeurs mesurées par le capteur de pression sont mémorisées pendant le déroulement du mode d'acquisition, soit directement sous la forme de valeurs de pression, soit après traitement sous la forme de valeurs d'altitude. Cette dernière alternative est toutefois préférée dans la mesure où le traitement des valeurs de pression doit être fait une première fois au moment de leur affichage sous la forme de valeurs d'altitude pendant le mode d'acquisition. Ainsi, lorsque les valeurs sont mémorisées sous la forme de valeurs d'altitude, l'étape de traitement n'est plus nécessaire lors de l'affichage du profil d'une randonnée dont les données ont été mémorisées, dans le cadre du mode historique.

De même que dans le mode de réalisation précédent, l'homme du métier peut choisir de recourir à une fréquence de mémorisation égale ou inférieure à la fréquence à laquelle les mesures sont effectuées par le capteur de pression.

En ce qui concerne les valeurs du dénivelé, on peut prévoir de les mémoriser directement après qu'elles aient été calculées pendant le déroulement du mode d'acquisition en vue de leur affichage. Ainsi, une simple lecture du contenu de la mémoire est suffisant pour permettre un affichage ultérieur du profil de la randonnée mémorisée lors de l'exécution du mode historique.

Toutefois, l'homme du métier pourra décider de ne pas mémoriser les valeurs de dénivelé calculées pendant le mode d'acquisition, mais de les calculer à nouveau lors d'une éventuelle exécution du mode historique, sans sortir du cadre de la présente invention. Cette dernière solution présente en effet l'avantage, par rapport à la solution précédente, de nécessiter une zone mémoire de taille moins importante, ce qui peut se révéler être un critère essentiel dans la fabrication de la montre correspondante.

Une fois la randonnée terminée, le porteur de la montre 40 peut désactiver le mode d'acquisition par une action prédéfinie sur la tige-couronne 7 pour retourner au mode horaire et interrompre l'alimentation du capteur de pression.

Le mode historique mis en oeuvre dans le dispositif selon le présent mode de réalisation est similaire à celui décrit en relation avec les premiers modes de réalisation. Il est préférablement activé par une action sur la tige-couronne 7 à partir du mode horaire. Suite à la détection de l'action adéquate sur la tige-couronne, le circuit intégré 20 commande les aiguilles des heures 10 et des minutes 11 pour qu'elles reproduisent l'affichage du profil de la dernière randonnée.

Ainsi, dans le mode historique selon le présent mode de réalisation, l'aiguille des minutes 11 est commandée à une vitesse accélérée pour indiquer, à un instant donné, la valeur de l'altitude correspondante dans le déroulement de la randonnée, tandis que l'aiguille des heures 10 indique la valeur correspondante du dénivelé par rapport à l'altitude du début de la randonnée, ces valeurs étant calculées à partir de la mesure du capteur de pression.

De même que dans les deux premiers modes de réalisation, on peut prévoir une pluralité de zones mémoire, chacune étant susceptible de stocker les valeurs correspondant à une randonnée particulière. Des séquences d'actions adaptées sur la tige-couronne 7 sont alors prévues pour permettre à l'utilisateur de sélectionner les données relatives à une randonnée plutôt qu'à une autre.

En outre, on peut également prévoir différents paramètres pour la vitesse d'affichage de l'historique de la dernière randonnée sans sortir du cadre de la présente invention.

Les moyens d'activation et de désactivation du mode historique, de même que les moyens permettant sa mise en oeuvre ne seront pas décrits plus en détail dans la mesure où ils peuvent être similaires aux moyens décrits en relation avec les premiers modes de réalisation.

On comprend bien que la présente invention n'est pas limitée à la nature des informations affichées. A titre d'exemple, on peut imaginer une variante de réalisation (non représentée) du dispositif selon la présente invention sur la base de la montre 40 qui vient d'être décrite et programmée pour afficher, au lieu d'une altitude et d'un dénivelé, une vitesse instantanée de la variation d'altitude et une vitesse moyenne de la variation d'altitude calculée sur une période glissante. Ce type de dispositif électronique se révèle utile dans la pratique de certains sports aériens comme le parapente ou le vol à voile. Une telle variante présente un avantage supplémentaire par rapport à la montre 40, du point de vue de la lisibilité, du fait que la position relative des aiguilles fournit une indication additionnelle, cette indication étant une appréciation qualitative de l'accélération de la variation de l'altitude.

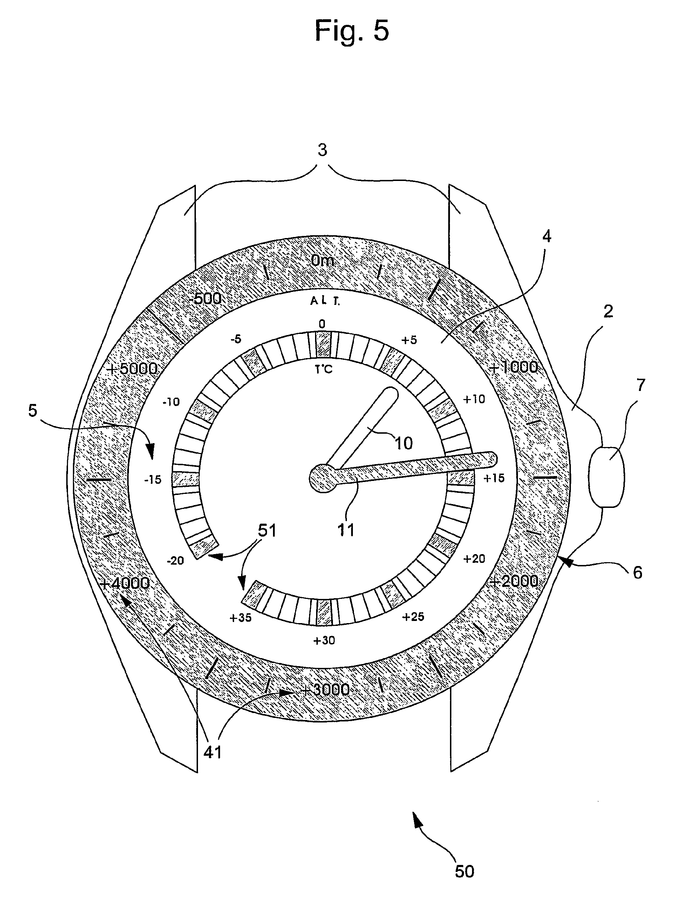

La figure 5 représente un dispositif électronique portable selon un quatrième mode de réalisation de la présente invention, sous une forme similaire à ce qui a été décrit précédemment, c'est-à-dire sous la forme d'une montre 50.

Conformément au présent mode de réalisation, la montre 50 comporte deux capteurs permettant respectivement d'effectuer des mesures d'une première et d'une seconde grandeurs physiques. Ainsi, des moyens sont prévus pour afficher la valeur d'une première variable liée à la première grandeur physique à l'aide d'un premier organe d'affichage analogique et, pour afficher la valeur d'une seconde variable liée à la seconde grandeur physique à l'aide d'un second organe d'affichage analogique.

La montre 50, représentée et décrite à titre d'exemple non limitatif, est munie d'un capteur de pression de type similaire au capteur de pression mentionné en relation avec les modes de réalisation précédents. La montre 50 est munie en outre d'un capteur, de type conventionnel, dont les mesures permettent d'accéder à des valeurs de température, comme par exemple une thermistance.

La montre 50 comporte les mêmes premières graduations 41 en mètres que la montre 40 décrite en relation avec le troisième mode de réalisation. Les graduations 41 sont disposées sur la lunette fixe 6 pour permettre l'indication de valeurs d'altitude en relation avec l'aiguille des minutes 11.

Des secondes graduations 51, en degrés Celsius, sont arrangées sur le cadran 4 pour permettre l'indication de valeurs de température en relation avec l'aiguille des heures 10. Les secondes graduations 51 s'étendent, dans le sens de rotation horaire, depuis la position 8 heures, correspondant à une température de - 20°C, jusqu'à la position 7 heures, correspondant à une température de +35°C.

Bien entendu, l'homme du métier peut modifier l'unité d'indication de la température ou la plage de l'affichage en température, pour l'adapter à ses propres besoins, sans sortir du cadre de la présente invention.

De même que pour les modes de réalisation précédents, l'utilisateur de la montre 50 peut activer un mode d'acquisition de données liées à son environnement par une action adaptée sur la tige-couronne 7 à partir du mode de fonctionnement horaire. Dans le mode d'acquisition, les deux capteurs de pression et de température (portant les références numériques respectives 23 et 52 sur la figure 2) sont alimentés pour effectuer des mesures périodiques respectivement de la pression et de la température environnantes. Les résultats des mesures sont traités par le circuit intégré 20, puis mis en mémoire dans la zone mémoire 26 avec une fréquence égale ou inférieure à la fréquence des mesures, tel qu'exposé plus haut.

L'homme du métier ne rencontrera pas de difficulté particulière pour effectuer la programmation du circuit intégré 20, notamment pour la méthode de mise en mémoire des valeurs traitées. On peut en effet envisager de stocker les valeurs liées aux mesures de pression et celles liées aux valeurs de température soit dans des zones de mémoire indépendantes l'une de l'autre, soit dans une zone mémoire unique, sans sortir du cadre de la présente invention.

Conformément à la présente invention, la montre 50 comporte un troisième mode de fonctionnement sous la forme d'un mode historique, similaire aux modes historiques décrits en relation avec les modes de réalisation précédents.

Dans le mode historique, l'aiguille des minutes 11 est commandée pour reproduire les variations d'altitude en fonction du temps d'après les données mémorisées. On peut noter que, de même que pour le troisième mode de réalisation, une information temporelle est implicitement contenue dans la durée nécessaire à afficher l'ensemble des mesures mémorisées. Toutefois, cette information temporelle est relative, c'est-à-dire que, par exemple, on peut évaluer un temps de montée relativement à un temps de descente pour une randonnée dont l'historique est affiché, mais la durée absolue ou effective de la randonnée n'est pas directement accessible à partir du mode historique tel qu'il a été décrit plus haut.

Tandis que l'aiguille des minutes 11 affiche l'altitude à un instant donné, l'aiguille des heures 10 est commandée pour afficher la température correspondante, telle qu'elle a été mémorisée lors du déroulement du mode d'acquisition. Ainsi, la visualisation de l'historique permet à l'utilisateur de la montre 50 d'avoir une bonne appréciation de l'évolution de la température en fonction de l'altitude au cours d'une randonnée, par exemple. En effet, les moyens d'affichage retenus présentent une excellente lisibilité et une approche intuitive qui rendent la lecture des informations affichées très claire pour l'utilisateur.

Bien entendu, la présentation de la montre 50, telle que représentée et décrite, n'est pas limitative. On peut par exemple envisager une variante avec des plages d'utilisation en altitude et/ou en température différentes de celles mentionnées ci-dessus.

La description qui précède correspond à des modes de réalisation préférés de l'invention et ne saurait en aucun cas être considérée comme limitative, en ce qui concerne plus particulièrement la structure décrite pour la montre et ses circuits électroniques, la nature et le nombre des organes de commande utilisés, les correspondance de couleurs retenues ou encore l'emplacement des graduations. Plus particulièrement, en ce qui concerne l'ergonomie de l'affichage, on constate que l'association entre une aiguille donnée et une zone d'affichage spécifique au moment de la lecture est facilitée lorsque leurs apparences respectives sont similaires, le choix de couleur identique, tel que décrit dans la présente demande, en constituant un exemple de réalisation non limitatif. On peut notamment prévoir en outre un éclairage du cadran, par exemple. D'autre part, l'attribution des différentes fonctions aux aiguilles des heures et des minutes n'est pas limitative et on pourrait inverser leurs rôles respectifs sans modifier la nature de la présente invention.

A titre d'exemple, le dispositif électronique peut être agencé, sans sortir du cadre de la présente invention, de telle manière qu'une des deux aiguilles est commandée pour afficher le dénivelé total calculé entre l'altitude du point de départ et l'altitude à un point donné, tandis que la seconde aiguille est commandée pour indiquer soit le dénivelé cumulé positif soit le dénivelé cumulé négatif depuis le point de départ. On peut alors prévoir que l'utilisateur a la possibilité de choisir le dénivelé cumulé le mieux adapté à l'activité qu'il souhaite pratiquer. A titre illustratif, il est plus intéressant de connaître la valeur du dénivelé cumulé négatif lorsqu'on pratique la descente à ski et la valeur du dénivelé cumulé positif lors de la pratique de l'escalade.

L'homme du métier pourra appliquer le principe de l'historique tel que décrit plus haut à d'autres grandeurs physiques que celles mentionnées à titre illustratif sans sortir du cadre de la présente invention, comme par exemple en munissant le dispositif électronique d'un capteur de champ magnétique pour indiquer le nord magnétique à son porteur.

Par ailleurs, on peut prévoir pour chacun des modes de réalisation décrits une variante selon laquelle la montre comporte en outre une région présentant un affichage à cristaux liquides (schématisé sur la figure 2 sous la référence numérique 60) sans sortir du cadre de la présente invention. La mise en oeuvre d'un tel affichage permet en effet de compléter les indications des aiguilles des heures et des minutes par l'affichage simultané d'informations supplémentaires. On peut par exemple prévoir, dans le premier mode de réalisation, d'afficher la durée effective de la plongée concernée et/ou la profondeur maximale atteinte lors de celle-ci. De même, dans les modes de réalisation suivants, on peut prévoir d'afficher notamment des informations relatives à la durée effective d'une randonnée, ou encore de la durée écoulée depuis le début d'une randonnée à un instant donné dans les troisième et quatrième modes de réalisation.

On peut envisager des variantes supplémentaires pour les modes de réalisation précédemment décrits dans lesquelles une troisième aiguille est mise en oeuvre, comme par exemple, une grande aiguille de seconde centrée.

A titre illustratif, on peut prévoir sur la base du troisième mode de réalisation qu'en mode "altimètre de randonnée", de même que dans le mode historique, la troisième aiguille de seconde est commandée pour indiquer la valeur d'une altitude, tandis que les aiguilles des heures et des minutes sont commandées pour indiquer respectivement un dénivelé cumulé positif et un dénivelé cumulé négatif, les deux valeurs de dénivelés étant calculées à partir de l'altitude du point de départ.

Bien entendu, il est possible d'envisager de munir le dispositif électronique selon l'invention de moyens supplémentaires permettant de transférer des informations avec un ordinateur du type ordinateur personnel, via une connexion avec ou sans fil, de manière connue.

D'autre part, on peut envisager de munir le dispositif électronique d'une fonction baromètre dont les indications dériveraient des valeurs de pression mesurées, un affichage par les organes d'affichage analogiques d'un historique de l'évolution des tendances barométriques au cours du temps étant alors possibles.

De même, l'invention n'est pas limitée aux passages possibles d'un mode à l'autre tels que décrits, dans la mesure où ces paramètres sont modifiables par une programmation adéquate du circuit contrôleur. L'homme du métier ne rencontrera pas de difficulté particulière pour adapter le fonctionnement de la montre selon la présente invention à ses propres besoins.

## Revendications

1. Dispositif électronique (1) comportant un boîtier (2) contenant un mouvement horloger surmonté d'un cadran (4), ledit mouvement horloger comprenant des circuits électroniques (20) susceptibles de produire des signaux horaires à destination de moyens moteurs (27) commandant au moins deux organes d'affichage analogiques (10, 11), lesdits organes d'affichage analogiques étant disposés au-dessus du cadran (4) pour afficher l'heure courante dans un premier mode de fonctionnement dit mode horaire, le dispositif (1) comprenant en outre un capteur (23, 52) d'une grandeur physique, pour effectuer une acquisition périodique de la valeur de ladite grandeur physique en fonction du temps dans un second mode de fonctionnement, ledit capteur étant relié à des moyens de traitement desdites valeurs susceptibles de produire des signaux électriques à destination de moyens de mémorisation (26) prévus pour mémoriser lesdites valeurs, **caractérisé en ce qu'**il présente un troisième mode de fonctionnement dit mode historique dans lequel lesdits moyens de traitement sont agencés pour produire des signaux de commande à destination desdits moyens moteurs pour effectuer un affichage représentatif des valeurs mémorisées de la grandeur physique en fonction du temps, de telle manière qu'au moins un premier (10) desdits organes d'affichage analogiques indique, en regard de graduations (8, 9, 33, 42, 51) adaptées du dispositif, la valeur d'une variable dont l'évolution est liée à celle de ladite valeur de la grandeur physique, à condition que ladite variable ne donne pas d'indication relative à la durée restante avant de devoir effectuer un palier de décompression ou d'indication relative à une profondeur minimale à ne pas dépasser par le porteur de la montre lors de la remontée d'une plongée, lorsque le second desdits organes d'affichage analogiques est commandé pour indiquer une information relative à une profondeur.

2. Dispositif selon la revendication 1, **caractérisé en ce que** dans ledit mode historique lesdits moyens de traitement sont en outre agencés pour produire des signaux à destination desdits moyens moteurs de telle manière que lesdits organes d'affichage analogiques (10, 11) restent superposés.

3. Dispositif selon la revendication 1, **caractérisé en ce que** dans ledit mode historique lesdits moyens de traitement sont en outre agencés pour produire des signaux à destination desdits moyens moteurs de telle manière que le second organe d'affichage analogique (11) est positionné en regard de la position douze heures.

4. Dispositif selon la revendication 1, **caractérisé en ce que** dans ledit mode historique, lesdits moyens de traitement sont en outre agencés pour produire des signaux à destination desdits moyens moteurs de telle manière qu'à un instant donné le second organe d'affichage analogique (11) indique la durée écoulée depuis le début de ladite acquisition tandis que ledit premier organe d'affichage analogique (10) indique la valeur de ladite variable au dit instant.

5. Dispositif selon la revendication 1, **caractérisé en ce qu'**il comporte des moyens supplémentaires (21) pour calculer la valeur d'une seconde variable à partir de ladite valeur mesurée de la grandeur physique, lesdits moyens de traitement étant agencés pour produire des signaux à destination desdits moyens moteurs de telle manière que le second organe d'affichage (11) indique à chaque instant, dans ledit mode historique, la valeur de ladite seconde variable correspondant à la valeur de ladite variable affichée par ledit premier organe d'affichage (10).

6. Dispositif selon la revendication 1, ledit capteur étant un capteur de champ magnétique, **caractérisé en ce que**, dans ledit mode historique, lesdits moyens de traitement sont agencés pour produire des signaux à destination desdits moyens moteurs de telle manière que lesdits organes d'affichage analogiques (10, 11) sont alignés de manière à indiquer le nord magnétique.

7. Dispositif selon l'une quelconque des revendications 1 à 5, **caractérisé en ce que** ledit capteur est un capteur de la pression ambiante.

8. Dispositif selon la revendication 7, **caractérisé en ce que** ledit premier organe d'affichage analogique (10) indique une profondeur mesurée.

9. Dispositif selon la revendication 8, **caractérisé en ce qu'**il comporte en outre des moyens pour activer automatiquement ledit second mode de fonctionnement à partir dudit mode horaire en réponse à une immersion du dispositif (1) dans de l'eau.

10. Dispositif selon la revendication 7, **caractérisé en ce que** ledit premier organe d'affichage analogique (10) indique une altitude mesurée.

11. Dispositif selon la revendication 10, **caractérisé en ce que** ledit second organe d'affichage analogique (11) indique une valeur de dénivelé.

12. Dispositif selon la revendication 7, **caractérisé en ce que** ledit premier organe d'affichage analogique (10) indique une vitesse de variation de l'altitude sensiblement instantanée.

13. Dispositif selon la revendication 12, **caractérisé en ce que** des moyens supplémentaires sont prévus pour produire des signaux à destination desdits moyens de commande de telle manière que ledit second organe d'affichage (11) indique en outre, dans ledit mode historique et à un instant donné, une vitesse moyenne de variation de l'altitude calculée sur un intervalle de temps prédéfini précédant ledit instant donné.

14. Dispositif selon l'une quelconque des revendications précédentes, **caractérisé en ce qu'**il comporte un capteur (52) permettant de mesurer une grandeur physique représentative de la température ambiante, lesdits circuits électroniques étant susceptibles de mémoriser les mesures dudit capteur de température pour produire des signaux électriques à destination desdits moyens moteurs (27) de telle manière que l'un desdits organes d'affichage analogiques indique la valeur de la température dans ledit mode historique.

15. Dispositif selon l'une quelconque des revendications précédentes, **caractérisé en ce que** dans ledit second mode de fonctionnement lesdits moyens de traitement sont agencés pour produire des signaux à destination desdits moyens moteurs de telle manière que, pendant le déroulement de ladite acquisition, l'affichage du dispositif est identique à l'affichage du mode horaire.

16. Dispositif selon l'une quelconque des revendications 1 à 12, **caractérisé en ce que** dans ledit second mode de fonctionnement, lesdits moyens de traitement sont agencés pour produire des signaux à destination desdits moyens moteurs de telle manière que ledit premier organe d'affichage analogique (10) affiche la valeur de ladite variable sensiblement en temps réel.

17. Dispositif selon l'une quelconque des revendications précédentes, **caractérisé en ce que**, dans le mode historique, lesdits circuits électroniques (20) sont susceptibles de commander lesdits moyens moteur (27) de sorte que l'affichage de la valeur de ladite variable en fonction du temps est effectué sur une durée maximale prédéfinie, de telle manière que si la durée effective de ladite acquisition est supérieure à ladite durée prédéfinie, l'affichage de la valeur de ladite variable en fonction du temps est réalisé de manière accélérée.

18. Dispositif selon l'une quelconque des revendications précédentes, **caractérisé en ce que** lesdits circuits électroniques (20) sont agencés pour réaliser une mémorisation desdites valeurs mesurées de manière périodique dans ledit second mode de fonctionnement.

19. Dispositif selon la revendication 18, **caractérisé en ce que** lesdits circuits électroniques (20) sont agencés pour modifier la période de mémorisation desdites valeurs mesurées en fonction de la durée effective de ladite acquisition.

20. Dispositif selon l'une quelconque des revendications précédentes, **caractérisé en ce qu'**il comporte en outre un affichage à cristaux liquides (60) pour afficher des informations complémentaires aux indications fournies par lesdits organes d'affichage analogiques (10, 11).

21. Procédé d'affichage d'un historique pour dispositif électronique (1) comportant un boîtier (2) contenant un mouvement horloger surmonté d'un cadran (4). ledit mouvement horloger comprenant des circuits électroniques (20) susceptibles de produire des signaux horaires à destination de moyens moteurs (27) commandant au moins deux organes d'affichage analogiques (10, 11), lesdits organes d'affichage analogiques étant disposés au-dessus du cadran (4) pour afficher l'heure courante dans un premier mode de fonctionnement dit mode horaire, le dispositif (1) comportant en outre un capteur (23, 52) d'une grandeur physique, le procédé comprenant les étapes consistant à:
a) effectuer, dans un premier temps, une acquisition périodique de la valeur de ladite grandeur physique en fonction du temps dans un second mode de fonctionnement dudit dispositif électronique,
b) transmettre les résultats de ladite acquisition périodique à des moyens de traitement desdites valeurs susceptibles de produire des signaux électriques à destination de moyens de mémorisation (26) prévus pour mémoriser lesdites valeurs,
**caractérisé en ce qu'**il comporte en outre, dans un troisième mode de fonctionnement dit mode historique, une étape ultérieure consistant à commander lesdits moyens moteurs pour effectuer un affichage représentatif des valeurs mémorisées de la grandeur physique en fonction du temps, au moins un premier (10) desdits organes d'affichage analogiques indiquant, en regard de graduations (8, 9, 33, 42, 51) adaptées du dispositif, la valeur d'une variable dont l'évolution est liée à celle de ladite valeur de la grandeur physique, à condition que ladite variable ne donne pas d'indication relative à la durée restante avant de devoir effectuer un palier de décompression ou d'indication relative à une profondeur minimale à ne pas dépasser par le porteur de la montre lors de la remontée d'une plongée, lorsque le second desdits organes d'affichage analogiques est commandé pour indiquer une information relative à une profondeur.

## Claims

1. Electronic device (1) including a case (2) containing a watch movement on which a dial (4) is mounted, said watch movement including electronic circuits (20) able to generate time signals to be sent to motor means (27) controlling at least two analogue display members (10, 11), said analogue display members being arranged above the dial (4) to display the current time in a first operating mode, called the time mode, the device (1) further including a sensor (23, 57) for a physical magnitude, for the periodic acquisition of the value of said physical magnitude as a function of time in a second operating mode, said sensor being connected to means for processing said values capable of generating electric signals to storage means (26) provided for storing said values, **characterized in that** it has a third operating mode called the historic mode in which said processing means are arranged for generating control signals to be sent to said motor means for a display representative of the stored values of the physical magnitude as a function of time, such that at least a first (10) of said analogue display members indicates, opposite suitable graduations (8, 9, 33, 42, 51) of the device, the value of a variable the change in which is linked to said physical magnitude value, on condition that said variable does not give any indication relating to the time remaining before a decompression stop has to be made or any indication relating to a minimum depth not to be exceeded by the person wearing the watch when coming up from a dive, when the second of said analogue display members is made to indicate information relating to a depth.

2. Device according to claim 1, **characterized in that** in said historic mode said processing means are further arranged for generating signals to be sent to said motor means such that said analogue display means (10, 11) remain superposed.

3. Device according to claim 1, **characterized in that** in said historic mode said processing means are also arranged for generating signals to be sent to said motor means such that the second analogue display member (11) is positioned opposite the twelve o'clock position.

4. Device according to claim 1, **characterized in that** in said historic mode, said processing means are further arranged for generating signals to be sent to said motor means, such that at a given instant the second analogue display member (11) indicates the elapsed time since the start of said acquisition whereas said first analogue display member (10) indicates the value of said variable at said instant.

5. Device according to claim 1, **characterized in that** it includes additional means (21) for calculating the value of a second variable from said measured value of the physical magnitude, said processing means being arranged for generating signals to be sent to said motor means such that the second display member (11) indicates at each instant, in said historic mode, the value of said second variable corresponding to the value of said variable displayed by said first display member (10).

6. Device according to claim 1, said sensor being a magnetic field sensor, **characterized in that**, in said historic mode, said processing means are arranged for generating signals to be sent to said motor means such that said analogue display members (10, 11) are aligned so as to indicate magnetic north.

7. Device according to any of claims 1 to 5, **characterized in that in that** said sensor is an ambient pressure sensor

8. Device according to claim 7, **characterized in that** said first analogue display member (10) indicates a measured depth.

9. Device according to claim 8, **characterized in that** it further includes means for automatically activating said second operating mode from said time mode in response to immersion of the device (1) in water.

10. Device according to claim 7, **characterized in that** said first analogue display member (10) indicates a measured altitude.

11. Device according to claim 10, **characterized in that** said second analogue display member (11) indicates an altitude difference value.

12. Device according to claim 7, **characterized in that** said first analogue display member (10) indicates a substantially instantaneous attitude variation speed.

13. Device according to claim 12, **characterized in that** additional means are provided for generating signals to be sent to said control means such that said second analogue display member (11) further indicates, in said historic mode and at a given instant, a means attitude variation speed calculated over a predefined period of time preceding said given instant.

14. Device according to any of the preceding claims, **characterized in that** it includes a sensor (52) for measuring a physical magnitude representative of the ambient temperature, said electronic circuits being capable of storing the measurements of said temperature sensor to generate electric signals to be sent to said motor means (27) such that one of said analogue display members indicates the temperature value in said historic mode.

15. Device according to any of the preceding claims, **characterized in that** in said second operating mode, said processing means are arranged for generating signals to be sent to said motor means such that, during the course of said acquisition, the display of the device is identical to the time mode display.

16. Device according to any of the preceding claims 1 to 12, **characterized in that** in said second operating mode, said processing means are arranged for generating signals to be sent to said motor means such that said first analogue display member (10) display the value of said variable substantially in real time.

17. Device according to any of the preceding claims, **characterized in that**, in said historic mode, said electronic circuits (20) are capable of operating said motor means (27) such that the display of the value of said variable as a function of time is performed over a predefined maximum period of time, such that if the actual duration of said acquisition is greater than said predefined period of time, the value of said variable as a function of time is displayed in an accelerated manner.

18. Device according to any of the preceding claims, **characterized in that** said electronic circuits (20) are arranged for periodically storing said measured values in said second operating mode.

19. Device according to claim 18, **characterized in that** said electronic circuits (20) are arranged for altering the storage period of said measured values as a function of the actual duration of said acquisition.

20. Device according to any of the preceding claims, **characterized in that** it further includes a liquid crystal display (60) for displaying complementary information to the indications provided by said analogue display means (10, 11).

21. Historic display method for electronic device (1) including a case (2) containing a watch movement on which a dial (4) is mounted, said watch movement including electronic circuits (20) able to generate time signals to be sent to motor means (27) controlling at least two analogue display members (10, 11), said analogue display members being arranged above the dial (4) to display the current time in a first operating mode, called the time mode, the device (1) further including a sensor (23, 52) for a physical magnitude, the method including the steps of :
a) first of all, performing a periodic acquisition of the value of said physical magnitude as a function of time in a second operating mode of said electronic device,
b) transmitting the results of said periodic acquisition to means for processing said values capable of generating electric signals to be sent to storage means (26) provided for storing said values,
**characterized in that** it further includes, in a third operating mode called the historic mode, a subsequent step consisting in controlling said motor means to form a display representative of the stored values of the physical magnitude as a function of time, at least a first (10) of said analogue display members indicating, opposite appropriate graduations (8, 9, 33, 42, 5) of the device, the value of a variable the change in which is linked to said physical magnitude value, on condition that said variable does not give any indication relating to the time remaining before a decompression stop has to be made or any indication relating to a minimum depth not to be exceeded by the person wearing the watch when coming up from a dive, when the second of said analogue display members is made to indicate information relating to a depth.

## Patentansprüche

1. Elektronische Einrichtung (1) beinhaltend ein Gehäuse, das ein Uhrwerk enthält, auf dem ein Zifferblatt (4) angebracht ist, wobei das Uhrwerk elektronische Schaltungen (20) umfasst, die Zeitsignale für Motormittel (27) erzeugen könnten, die wenigstens zwei analoge Anzeigeorgane (10,11) steuern, wobei die besagten analogen Anzeigeorgane über dem Zifferblatt (4) angeordnet sind, um die aktuelle Zeit in einem ersten Betriebsmodus, der als Zeitmodus bezeichnet wird, anzuzeigen, wobei die Einrichtung (1) zudem einen Sensor (23,52) einer physikalischen Grösse umfasst, um in einem zweiten Betriebsmodus eine periodische Erfassung des Wertes der besagten physikalischen Grösse in Abhängigkeit von der Zeit auszuführen, wobei der Sensor mit Mitteln für die Bearbeitung der besagten Werte verbunden ist, die elektrische Signale nach Seicherungsmitteln (26) erzeugen können, die für die Speicherung der der besagten Werte vorgesehen sind, **dadurch gekennzeichnet, dass** sie einen dritten Betriebsmodus aufweist, der als historischer Verlaufmodus bezeichnet wird, in welchem die besagten Bearbeitungsmittel derart angeordnet sind, dass sie Steuersignale nach den besagten Motormittel erzeugen, um eine repräsentative Anzeige der gespeicherten Werte der physikalischen Grösse in Abhängigkeit von der Zeit auszuführen, so dass wenigstens ein erstes (10) der besagten zwei analoge Anzeigeorgane (10,11) den Wert einer Variabel, deren Entwicklung mit derjenigen der besagten physikalischen Grösse verbunden ist, gegenüber angepassten Graduierungen (8,9,33,42,51) der Einrichtung angibt, vorausgesetzt, dass die besagte Variabel keine Angabe bezüglich einer maximalen verbleibenden Zeitspanne, bevor man eine Drucksausgleichspause durchführen muss, oder eine minimale Tiefe, die während des Wiederaufstiegs eines Tauchgangs nicht überschritten werden soll, gibt, wenn das zweite der besagten zwei analoge Anzeigeorgane (10,11) derart gesteuert ist, dass es eine Tiefe bezogene Information angibt.

2. Elektronische Einrichtung (1) gemäss Anspruch 1, **dadurch gekennzeichnet, dass** die besagten Bearbeitungsmittel im historischen Verlaufmodus ferner derart angeordnet sind, dass sie Steuersignale nach den besagten Motormittel derart erzeugen, dass die besagten analogen Anzeigeorgane (10,11) aufeinander überlagert bleiben.

3. Elektronische Einrichtung (1) gemäss Anspruch 1, **dadurch gekennzeichnet, dass** die besagten Bearbeitungsmittel im historischen Verlaufmodus ferner derart angeordnet sind, dass sie Steuersignale nach den besagten Motormitteln derart erzeugen, dass das besagte zweite analoge Anzeigeorgan (11) gegenüber der 12 Uhr Position bleibt.

4. Elektronische Einrichtung (1) gemäss Anspruch 1, **dadurch gekennzeichnet, dass** die besagten Bearbeitungsmittel im historischen Verlaufmodus ferner derart angeordnet sind, dass sie Steuersignale nach den besagten Motormitteln derart erzeugen, dass das zweite analoge An-reigeorgan (11) an einem gewissen Zeitpunkt die abgelaufene Dauer seit dem Anfang der Erfassung angibt, während das besagte erste analoge Anzeigeorgan (10) den Wert der besagten Variabel am gleichen Zeitpunkt angibt.

5. Elektronische Einrichtung (1) gemäß Anspruch 1, **dadurch gekennzeichnet, dass** sie zusätzliche Mittel (21) für die Berechnung des Wertes einer zweiten Variabel nach dem bemessenen Wert der physikalischen Grösse umfaßt, wobei die besagten Bearbeitungsmittel im historischen Verlaufmodus derart angeordnet sind, dass sie Steuersignale nach den besagten Motormitteln derart erzeugen, dass das zweite Anzeigeorgan (11) jederzeit den Wert der zweiten Variabel angibt, den dem von dem ersten Anzeigeorgan (10) angezeigten Wert entsprechen.

6. Elektronische Einrichtung (1) gemäß Anspruch 1, **dadurch gekennzeichnet, dass** der besagte Sensor ein magnetischer Sensor ist, wobei die besagten Bearbeitungsmittel im historischen Verlaufmodus derart angeordnet sind, dass sie Steuersignale nach den besagten Motormitteln derart erzeugen, dass die besagte analoge Anzeigeorgan (10,11) derart ausgerichtet sind, dass sie den magnetischen Norden angeben.

7. Elektronische Einrichtung (1) gemäss einem der Ansprüche 1 bis 5, **dadurch gekennzeichnet, dass** der besagte Sensor ein Umgebungsdrucksensor ist.

8. Elektronische Einrichtung (1) gemäss Anspruch 7, **dadurch gekennzeichnet, dass** das besagte erste analoge Anzeigeorgan (10) eine bemessene Tiefe angibt.

9. Elektronische Einrichtung (1) gemäss Anspruch 8, **dadurch gekennzeichnet, dass** sie ferner Mittel für die automatische Aktivierung der besagten zweiten Betriebsmodus aus dem besagten Zeitmodus heraus umfasst, wenn die Einrichtung (1) ins Wasser eingetaucht wird.

10. Elektronische Einrichtung (1) gemäss Anspruch 7, **dadurch gekennzeichnet, dass** das besagte erste analoge Anzeigeorgan (10) eine bemessene Höhe angibt.

11. Elektronische Einrichtung (1) gemäss Anspruch 10, **dadurch gekennzeichnet, dass** das besagte zweite analoge Anzeigeorgan (11) einen bemessenen f'löhenunterschiedswert ängibt.

12. Elektronische Einrichtung (1) gemäss Anspruch 7, **dadurch gekennzeichnet, dass** das besagte erste analoge Anzeigeorgan (10) eine im Wesentlichen augenblicklichen Höhenänderungsgeschwindigkeit angibt.

13. Elektronische Einrichtung (1) gemäss Anspruch 12, **dadurch gekennzeichnet, dass** zusätzliche Mittel vorgesehen sind, um Signale nach den besagten Steuermitteln derart zu erzeugen, dass das zweite Anzeigeorgan (11) ferner im historischen Verlaufmodus und an einem gewissen Zeitpunkt eine Durchschnittliche Höhenänderungsgeschwindigkeit angibt, die auf einem vorbestimmten Zeitintervall vor dem besagten gewissen Zeitpunkt berechnet ist.

14. Elektronische Einrichtung (1) gemäss einem der vorigen Ansprüche, **dadurch gekennzeichnet, dass** sie einen Sensor (52) umfasst, der eine physikalische Grösse, die repräsentativ für die Umgebungstemperatur ist, bemessen kann, umfasst, wobei die elektronischen Schaltungen (20) die Messungen der besagten Temperatursensor speichern kann, um elektrische Signale nach den Motormitteln derart zu erzeugen, dass eines der besagten analogen Anzeigeorgane (10,11) den Temperaturwert im historischen Verlaufmodus angibt.

15. Elektronische Einrichtung (1) gemäss einem der vorigen Ansprüche, **dadurch gekennzeichnet, dass** die besagten Bearbeitungsmittel im besagten zweiten Betriebsmodus ferner derart angeordnet sind, dass sie Steuersignale nach den besagten Motormitteln derart erzeugen, dass die Anzeige der Einrichtung während des Erfassungsverlaufs gleich wie die Anzeige im Zeitmodus ist.

16. Elektronische Einrichtung (1) gemäss einem der Ansprüche 1 bis 12, **dadurch gekenntzeichnet, dass** die besagten Bearbeitungsmittel im besagten zweiten Betriebsmodus ferner derart anbeordnet sind, dass sie Steuersignale nach den besagten Motormitteln derart erzeugen, dass das besagte erste analoge Anzeigeorgan (10) den Wert der besagten Variable im wesentlichen in Echtzeit angibt.

17. Elektronische Einrichtung (1) gemäss einem der vorigen Ansprüche, **dadurch gekennzeichnet, dass** die besagten elektronischen Schaltungen (20) im historischen Verlaufmodus ferner die besagten Motormittel (27) derart steuern könnten, dass die Anzeige des Wertes der besagten Variabel in Abhängigkeit von der Zeit auf einer maximalen vorbestimmten Dauer durchgeführt ist, so dass die Anzeige des Wertes der besagten Variabel in Abhängigkeit von der Zeit beschleunigt ausgeführt ist, wenn die effektive Dauer der besagten Erfassung größer als die maximale vorbestimme Dauer ist.

18. Elektronisch Einrichtung (1) gemäss einem der vorigen Ansprüche, **dadurch gekennzeichnet, dass** die elektronischen Schaltungen (20) im besagten zweiten Betriebsmodus ferner derart angeordnet sind, dass sie eine periodische Speicherung der besagten bemessenen Werte ausführen.

19. Elektronische Einrichtung (1) gemäss Anspruch 18, **dadurch gekennzeichnet, dass** die elektronischen Schaltungen (20) derart angeordnet sind, dass sie die Periode der Speicherung der besagten bemessenen Werte in Abhängigkeit von der effektiven Dauer der besagten Erfassung wandern.

20. Elektronisch Einrichtung (1) gemäss einem der vorigen Ansprüche, **dadurch gekennzeichnet, dass** sie ferner eine Flüssigkristallanzeige (60) umfassen, um weitere Informationen anzuzeigen, die die von den besagten analogen Anzeigeorganen (10,11) gelieferten Informationen ergänzen.

21. Anzeigeverfahren eines historischen Verlaufs für eine elektronische Einrichtung (1) beinhaltend ein Gehäuse, das ein Uhrwerk enthält, auf dem ein Zifferblatt (4) angebrächt ist, , wobei das Uhrwerk elektronische Schaltungen (20) umfasst, die zeitsignale für Motormittel (27) erzeugen können, die wenigstens zwei analoge Anzeigeorgane (10,11) steuern, wobei die besagten analogen Anzeigeorgane über dem Zifferblatt (4) angeordnet sind, um die aktuelle Zeit in einem ersten Betriebsmodus, der als Zeitmodus bezeichnet wird, anzuzeigen, wobei die Einrichtung (1) zudem einen Sensor (23,52) einer physikalischen Grösse umfasst, wobei das Verfahren folgeende Schritte umfaßt:
a) zuerst eine periodische Speicherung des Wertes der besagten physikalischen Grösse in einer zweiten Betriebsmodus der elektronischen Einrichtung ausführen
b) die bemessenen Werte der besagten periodischen Erfassung an Bearbeitungsmittel übermitteln, die elektrische Signale nach Speicherungsmitteln (26) erzeugen können, die für die Speicherung der besagten Werte vorgesehen sind, **dadurch gekennzeichnet, dass** es einen weiteren Schritt in einem dritten Betriebsmodus, der als historischer Verlaufmodus bezeichnet wird, aufweist, der als historischer Verlaufmodus bezeichnet wird, der darin besteht, die besagten Motormittel derart zu steuern, dass sie eine repräsentative Anzeige der gespeicherten Werte der physikalischen Grösse in Abhängigkeit von der Zeit auszuführen, wobei wenigstens ein erstes (10) der besagten zwei analoge Anzeigeorgane (10,11) den Wert einer Variabel, deren Entwicklung mit derjenigen der besagten physikalischen Grösse verbunden ist, gegenüber angepassten Graduierungen (8,9,33,42,51) der Einrichtung angibt,
vorausgesetzt, dass die besagte Variabel keine Angabe bezüglich einer maximalen verbleibenden Zeitspanne, bevor man eine Drucksausgieichspause durchrühren muss, oder eine minimale Tiefe, die während des Wiederaufstiegs eines Tauchgangs nicht überschritten werden soll, gibt, wenn das zweite der besagten zwei analoge Anzeigeorgane (10,11) derart gesteuert ist, um eine Tiefe bezogene Information anzugeben.
